# EUROPEAN PATENT APPLICATION

(11) **EP 3 225 750 A1**
(43) Date of publication of application: **04.10.2017**
(21) Application number: 14864440.4
(22) Date of filing: 28.11.2014
(51) Int. Cl.: E02F 9/20, G06K 7/10, G06K 19/07

(54) **COMMUNICATION SYSTEM AND WORK VEHICLE**

(71) Applicant: Komatsu Ltd., Minato-ku Tokyo 107-8414 (JP)
(72) Inventor: KOSHI Takayuki, Hiratsuka-shi Kanagawa 254-8555 (JP); MIZUTANI Eiji, Hiratsuka-shi Kanagawa 254-8555 (JP)
(74) Representative: Grünecker Patent- und Rechtsanwälte PartG mbB
(86) International application number: PCT/JP2014/081657
(87) International publication number: WO 2015/076424

(57) **Abstract**

A communication system provided in a working vehicle includes: an identification device (30A, 30B, 30C, 30D) that stores identification information; a communication device (15) that outputs electric waves to communicate with the identification device (30A, 30B, 30C, 30D); an ambient temperature judging unit that judges whether or not an ambient temperature of the environment in which the identification device is disposed exceeds an operational temperature at which an operation of the identification device is ensured; and a communication controller that prohibits the communication device from outputting the electric waves when the ambient temperature judges that the ambient temperature exceeds the operational temperature.

## Description

### TECHNICAL FIELD

The present invention relates to a communication system and a working vehicle.

### BACKGROUND ART

A construction machine (e.g., a hydraulic excavator and a wheel loader), a delivery vehicle (e.g., a dump truck) and the like are typically known as a working vehicle. There is known technology of attaching a wireless tag (an identification device) to a replacement part (e.g., a filter) installed in such a working vehicle, reading information stored in the wireless tag using a reader-writer, and identifying the replacement part as a genuine part or an imitation (see, for instance, Patent Literature 1).

In a parts monitor disclosed in Patent Literature 1, when the replacement part (e.g., filter) is replaced or when an engine switch is operated, information (e.g., information on a part number) stored in the wireless tag of the replacement part is retrieved through the reader-writer. When the replacement part is identified as an imitation based on the acquired information about the part number, a controller outputs an alarm signal to stop an operation of the engine or display an alarm message on a monitor.

### CITATION LIST

### PATENT LITERATURE(S)

Patent Literature 1: JP-A-2008-25234

### SUMMARY OF THE INVENTION

### PROBLEM(S) TO BE SOLVED BY THE INVENTION

The working vehicle is operated in various environments and is occasionally operated in a severely hot area. A temperature in an engine room in which the engine is disposed and a pump room in which a pump is disposed easily becomes high during operation of the working vehicle.

When the identification device (wireless tag) is placed in a high temperature environment, the identification device may malfunction in communication with the reader-writer. Accordingly, when the reader-writer reads and writes information from and on the identification device in a high temperature environment, the identification device may malfunction, so that wrong information may be read (reading failure) or unintended information may be written (writing failure).

However, Patent Literature 1 fails to disclose or suggest a problem of the reading failure or the writing failure of the identification device caused by reading or writing information from or on the identification device in a high temperature environment.

An object of the invention is to provide a communication system and a working vehicle which are capable of at least preventing operation failure of an identification device to ensure an operation of the identification device.

### MEANS FOR SOLVING THE PROBLEM(S)

According to an aspect of the invention, a communication system provided in a working vehicle including an engine, the communication system includes: an identification device that stores identification information; a communication device that outputs electric waves to communicate with the identification device; an ambient temperature judging unit that judges whether or not an ambient temperature of an environment in which the identification device is disposed exceeds an operational temperature at which an operation of the identification device is ensured; and a communication controller that prohibits the communication device from outputting the electric waves when the ambient temperature judging unit judges that the ambient temperature of the environment exceeds the operational temperature.

According to the above aspect of the invention, the ambient temperature judging unit judges whether or not the ambient temperature of the environment in which the identification device is disposed exceeds the operational temperature of the identification device based on the temperature detected by the temperature detector. When the ambient temperature exceeds the operational temperature, the communication controller prohibits the communication device from outputting the electric waves. When the ambient temperature exceeds the operational temperature, the temperature of the identification device highly also possibly exceeds the operational temperature. Accordingly, when the identification device is under a high temperature environment, the data reading/writing to the identification device can be prevented from being executed, so that occurrence of operational failure of the identification device and data failure can be reliably prevented.

On the other hand, when the ambient temperature does not exceed the operational temperature, since the electric wave output of the identification device is not prohibited, data reading/writing to the identification device can be executed. At this time, when the data cannot be read from the identification device at the ambient temperature not exceeding the operational temperature, it can be understood that the identification device is removed.

The communication system according to the above aspect of the invention further includes a temperature detector that detects a temperature correlated to the ambient temperature of the environment in which the identification device is disposed, in which the ambient temperature judging unit judges whether or not the ambient temperature of the environment in which the identification device is disposed exceeds the operational temperature of the identification device based on the temperature detected by the temperature detector.

The temperature detector that detects the temperature correlated to the ambient temperature measures a temperature that influences the ambient temperature. For instance, since the engine of the working vehicle is a large scale heat source, the ambient temperature of the identification device disposed near the engine is influenced by the temperature of the engine. Since the temperature of the engine can be estimated from the temperature of the engine water, a temperature sensor for detecting the temperature of the engine water is an example of the temperature sensor.

According to the above aspect of the invention, since a typically provided temperature detector is used to judge the ambient temperature, no temperature detector is required to be newly provided. Accordingly, no change is required in the engine and the components around the engine, thereby easily achieving the temperature detector at a low cost.

With the above arrangement, preferably, the working vehicle includes a filter that eliminates dirt in a fluid, the identification device is attached to the filter, and the temperature detector is a temperature sensor that detects a temperature of the fluid flowing through the filter.

Examples of the filter include a fuel filter and an engine oil filter. The temperature of the identification device thus attached to the filter is influenced by the temperature of the fluid flowing through the filter. Accordingly, using the temperature sensor that detects the temperature of the identification device, the ambient temperature of the identification device can be estimated with a high accuracy and it can be judged with a high accuracy whether or not the ambient temperature exceeds the operational temperature. Moreover, since the temperature sensor is often provided in the working vehicle and no temperature sensor is required to be newly provided, the cost is reducible.

With the above arrangement, preferably, the identification device is attached to the engine, and the temperature detector is a temperature sensor that detects a water temperature of a cooling water of the engine.

The ambient temperature of the identification device attached to the engine is influenced by the temperature of the engine. Accordingly, using the temperature sensor that detects the water temperature of the cooling water of the engine, the ambient temperature of the identification device can be estimated with a high accuracy and it can be judged with a high accuracy whether or not the ambient temperature exceeds the operational temperature. Moreover, since the temperature sensor is provided in advance in order to detect overheat of the engine and no temperature sensor is required to be newly provided, the cost is reducible.

According to another aspect of the invention, a communication system provided in a working vehicle including an engine, the communication system includes: an identification device that stores identification information; a start command detector that detects a start of the engine; and a communication controller that instructs the communication device to output the electric waves when the start command detector detects the start of the engine, and to stop outputting the electric waves after electric wave output duration that is an elapsed time from a start to a stop of the output of the electric waves, in which the electric wave output duration is set at less than a first period required for the ambient temperature of the environment in which the identification device is disposed to exceed an operational temperature at which an operation of the identification device is ensured after the start of the engine.

According to the above aspect of the invention, the communication controller controls the duration when the communication device outputs the electric waves within a period from the start of the engine to the time when the electric wave output duration elapses. Since the electric wave output duration is set at less than a first period required for the ambient temperature of the environment in which the identification device is disposed to exceed the operational temperature of the identification device after the start of the engine, the communication device can output the electric waves to communicate when the temperature of the identification device does not exceed the operation temperature. On the other hand, since the output of the electric waves is stopped when the electric wave output duration elapses, the data reading/writing to the identification device can be prevented from being executed when the ambient temperature of the identification device is increased to be under a high temperature environment, so that occurrence of operational failure of the identification device and data failure can be reliably prevented.

The communication system according to the above aspect of the invention further includes a stop duration detector that detects engine stop duration from a previous stop of the engine to a next start of the engine. When the engine stop duration is less than a set value, the communication controller preferably prohibits the communication device from outputting the electric waves even when the start command detector detects the start of the engine.

With this arrangement, when the duration from the previous stop of the engine to the next start of the engine is short, the engine is kept at a high temperature, and the ambient temperature of the identification device is at a high temperature, the output of the electric waves can be prohibited. Accordingly, when the identification device is under a high temperature environment, the data reading/writing to the identification device can be prevented from being executed, so that occurrence of operational failure of the identification device and data failure can be reliably prevented.

According to a still another aspect of the invention, a communication system provided in a working vehicle including an engine and a filter that eliminates dirt in a fluid includes: an identification device that stores identification information and is attached to the filter; a communication device that outputs electric waves to communicate with the identification device; a temperature detector that detects a temperature of the fluid flowing through the filter, the temperature correlated to an ambient temperature of an environment in which the identification device is disposed; the ambient temperature judging unit judges whether or not the ambient temperature of the environment in which the identification device is disposed exceeds an operational temperature of the identification device that ensures an operation of the identification device based on the temperature detected by the temperature detector; and a communication controller that prohibits the communication device from outputting the electric waves when the ambient temperature judging unit judges that the ambient temperature exceeds the operational temperature.

With the above arrangement, preferably, the working vehicle includes an upper revolving body including a machine room, and the identification device and the communication device are provided in the machine room of the upper revolving body in the working vehicle.

According to a further aspect of the invention, a working vehicle includes the communication system according to the above aspect of the invention.

According to the above aspects of the invention, the same advantages as those in the above communication system can be attained.

### BRIEF DESCRIPTION OF DRAWING(S)

Fig. 1 is a perspective view showing a hydraulic excavator as an example of a working vehicle of the invention.
Fig. 2 is a schematic view showing an inside of a machine room.
Fig. 3 is a schematic view showing an inside of a pump room.
Fig. 4 is a schematic view showing a configuration of an IC tag.
Fig. 5 is a block diagram showing a configuration of the hydraulic excavator and an overall configuration of a parts information management system.
Fig. 6 is a block diagram showing a configuration of a reader.
Fig. 7 is a block diagram showing a configuration of a communication controller.
Fig. 8 is a flowchart showing an information collection process when a start command is given.
Fig. 9 is a flowchart showing an information transmission process.
Fig. 10 is a flowchart showing an information collection process by judging an ambient temperature.
Fig. 11 is a time chart explaining electric wave output duration.

### DESCRIPTION OF EMBODIMENT(S)

An exemplary embodiment of the invention will be described below with reference to attached drawings.

### Description of Overall Hydraulic Excavator

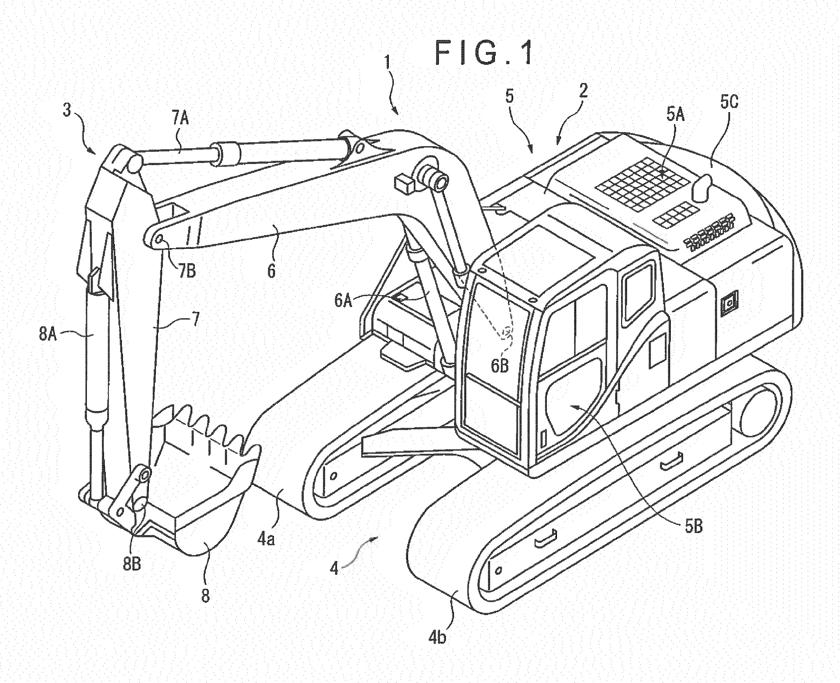

Fig. 1 is a perspective view showing a hydraulic excavator 1 as an example of a working vehicle of the invention.

In the exemplary embodiment, the hydraulic excavator 1 includes a vehicle body 2 and working equipment 3 as shown in Fig. 1. The vehicle body 2 includes an undercarriage 4 and an upper revolving body 5.

In the upper revolving body 5, a side where the working equipment 3 and a cab 5B are disposed is defined as a front and a side where a machine room 5A is disposed is defined as a back. A left side of the upper revolving body 5 facing the front is defined as a left and a right side of the upper revolving body 5 facing the front is defined as a right. In the hydraulic excavator 1 or the vehicle body 2, a side near the undercarriage 4 is defined as a bottom relative to the upper revolving body 5 while a side near the upper revolving body 5 is defined as a top relative to the undercarriage 4. When the hydraulic excavator 1 is disposed on a horizontal surface, the bottom is a side in a vertical direction, namely, a direction in which gravity acts, while the top is a side in a direction opposite the vertical direction.

In the exemplary embodiment, the hydraulic excavator 1 includes an internal combustion engine (e.g., a diesel engine) as a motive power generator. However, the motive power generator of the hydraulic excavator 1 is not limited to the internal combustion engine. For instance, the hydraulic excavator 1 may include the internal combustion engine, a generator motor and an electric storage device in combination (a so-called hybrid motive power generator).

### Machine Room

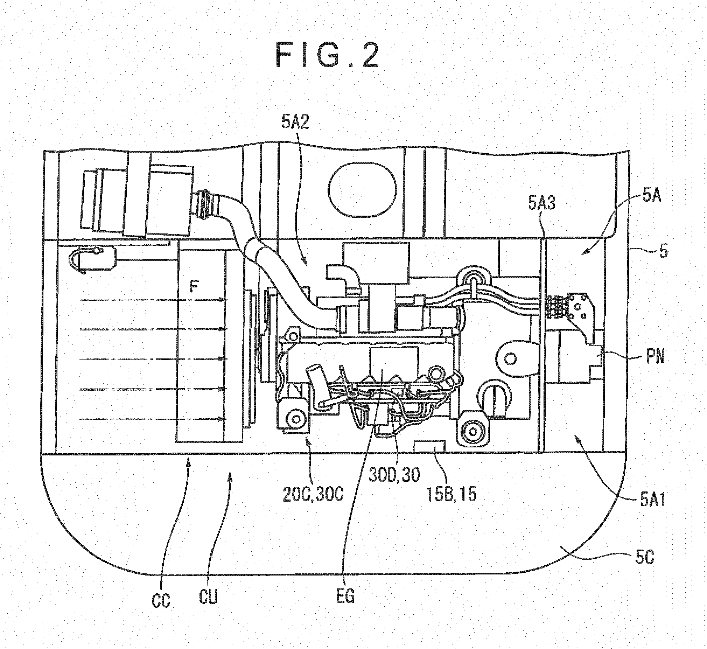

Fig. 2 is a schematic view showing the machine room 5A.

The upper revolving body 5 includes the machine room 5A, the cab 5B, and a counterweight 5C.

The machine room 5A is disposed at a first end (back side) of the upper revolving body 5. An inside of the machine room 5A is divided by a partition 5A3 into a pump room 5A1 and an engine room 5A2 as shown in Fig. 2. The pump room 5A1 is positioned on the right of the machine room 5A and the engine room 5A2 is positioned on the left of the machine room 5A, seen from the back.

### Engine Room

The engine room 5A2 contains an engine EG (motive power generator) and a cooling unit CU including a cooling core CC and the like. The cooling unit CU is disposed adjacent to the engine EG and cools a cooling water flowing in the engine EG and a hydraulic fluid flowing in a hydraulic device (not shown).

The engine EG is disposed in a substantially sealed space defined by being surrounded by a partition in front of the counterweight 5C, a partition in front of the engine room 5A2, the partition 5A3 for separating the engine room 5A2 from the pump room 5A1 on the right, and a door (not shown) on the left, and a top plate including an engine hood disposed above the engine EG.

Further, in the engine room 5A2, a filter 20C (a fuel main filter), an identification device 30C, an identification device 30D attached to the engine EG, and a reader 15B that communicates with the identification devices 30C and 30D are provided. These components will be described in detail below.

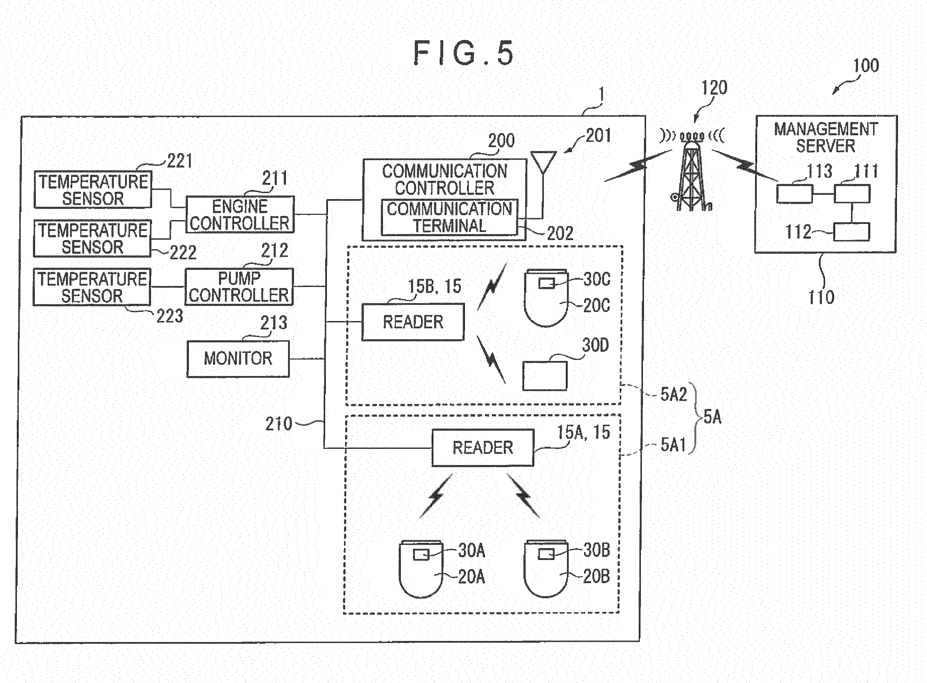

As shown in Fig. 5, the engine EG includes: a temperature sensor 221 (temperature detector) that detects a temperature of an engine oil described below; and a temperature sensor 222 (temperature detector) that detects a temperature of a cooling water (engine water temperature) in the engine EG . Note that the temperature sensor 221 that detects the temperature of the engine oil is not requisite.

The cab 5B is disposed at a second end (front side) of the upper revolving body 5 as shown in Fig. 1.

The counterweight 5C is provided on the farthest back side of the upper revolving body 5. The counterweight 5C is provided for weight balance with the working equipment 3 and is filled with weights. In other words, the machine room 5A is interposed between the cab 5B and the counterweight 5C.

The undercarriage 4 includes crawlers 4a and 4b. The undercarriage 4 is driven by a hydraulic motor (not shown) to rotate the crawlers 4a and 4b, whereby the hydraulic excavator 1 travels or is turned.

The working equipment 3 is attached to a lateral side of the cab 5B of the upper revolving body 5 and includes a boom 6, arm 7, bucket 8, boom cylinder 6A, arm cylinder 7A and bucket cylinder 8A. A base end of the boom 6 is jointed to a front of the vehicle body 2 through a boom pin 6B, whereby the boom 6 is movably attached. A base end of the arm 7 is jointed to a leading end of the boom 6 through an arm pin 7B, whereby the arm 7 is movably attached. The bucket 8 is jointed to a leading end of the arm 7 through a bucket pin 8B, whereby the bucket 8 is movably attached.

### Description of Pump Room

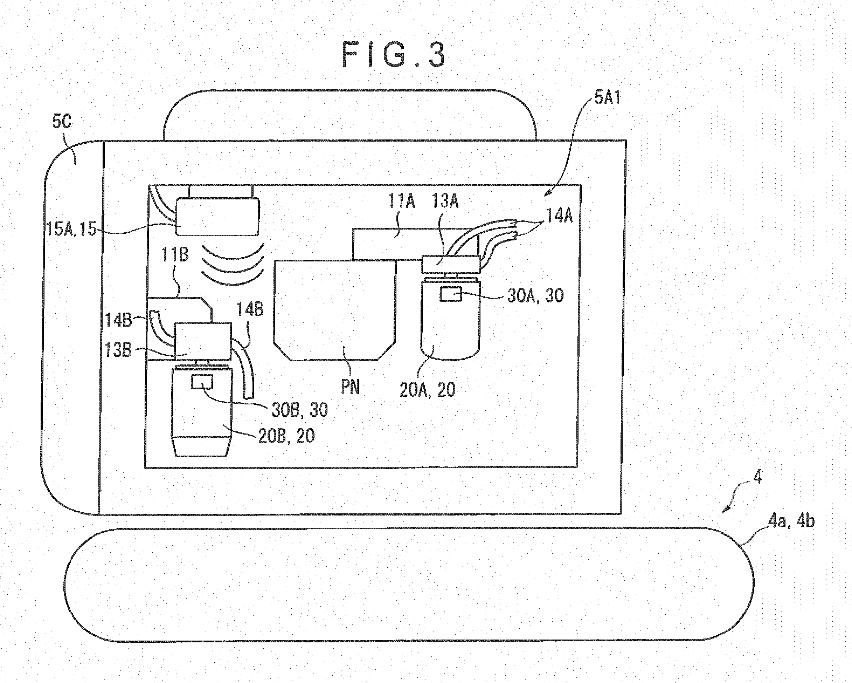

Fig. 3 is an illustration showing an inside of the pump room 5A1 with a door (not shown) opened from the right side of the upper revolving body 5. In other words, Fig. 3 is a schematic view showing an arrangement of filters 20A and 20B and a reader 15A in the pump room 5A1. The pump room 5A1 is disposed in a substantially sealed space defined by being surrounded by a door (not shown) on the right, a partition in front of the counterweight 5C, a partition in front of the pump room 5A1, and the partition 5A3 for separating the pump room 5A1 from the engine room 5A2, and the top plate including the engine hood disposed above the engine EG.

The pump room 5A1 houses a hydraulic pump PN as shown in Fig. 3. The hydraulic pump PN is mechanically connected to the engine EG and is driven by driving the engine EG. The hydraulic pump PN discharges hydraulic fluid to a hydraulic device such as the above boom cylinder 6A.

Specifically, a bracket 11A, on which the hydraulic pump PN is provided, is provided in the pump room 5A1. A filter head 13A (filter holding part) is attached to the bracket 11A. A hose 14A is attached to the filter head 13A. Further, the temperature sensor 221 (see Fig. 5) as the temperature detector that detects the temperature of the engine oil is disposed to the engine EG connected with the hose 14A. A temperature sensor 223 as the temperature detector that detects a temperature of hydraulic fluid is disposed, for instance, in a hydraulic fluid tank (not shown).

A filter head 13B is attached to the pump room 5A1 through a bracket 11B. A fuel hose 14B is attached to the filter head 13B.

### Filter Head in Pump Room and Types of Filter

The filter 20A is attached to the filter head 13A. The filter 20A is an oil filter for the engine oil and eliminates dirt and the like contained in the engine oil flowing in the hose 14A.

The filter 20A is connected to the engine EG (see Fig. 2) through the hose 14A. The engine oil accumulated in the engine EG is pumped out of the engine EG to be transferred to the filter 20A. The engine oil after passing through the filter 20A is returned to the engine EG.

A filter 20B is attached to the filter head 13B. The filter 20B is a fuel pre-filter and eliminates dirt and the like contained in the fuel flowing in the hose 14B. Note that the filter 20B is not a requisite for the hydraulic excavator 1. The hydraulic excavator 1 without the filter 20B is also usable.

The filter 20B (fuel pre-filter) is connected to a fuel tank (not shown) through the hose 14B. The fuel in the fuel tank (not shown) is transferred to the filter 20B. Subsequently, the fuel is transferred to the filter 20C (fuel main filter). After passing through the filter 20C, the fuel is transferred to a fuel injector (not shown). The fuel remaining in the fuel injector is returned to the fuel tank through a hose (not shown).

As described above, the filters 20A and 20B are provided in the pump room 5A1 while the filter 20C is provided in the engine room 5A2.

The filters 20 (20A, 20B, 20C) are parts requiring a regular replacement since a filter member inside the filters is clogged by use of the filters 20. Timing for the regular replacement is judged, for instance, based on accumulated operational duration shown by SMR (service meter) that measures operational duration of the engine in the hydraulic excavator 1. Such a judgment process is conducted by a communication controller 200 or a management server 111 which will be described below.

Identifcation devices 30A, 30B and 30C are respectively attached to the filters 20A, 20B and 20C. The identification device 30D is attached to the engine EG as described above.

### Description of Identification Device

The identification device 30 (30A, 30B, 30C, 30D) stores and provides information relating to the parts (including devices such as the engine EG in addition to the replacement parts) to which the identification device 30 is attached.

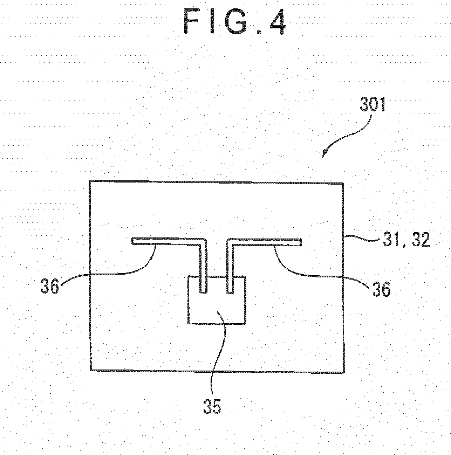

A passive type IC tag 301 that generates electric power by electromagnetic induction, microwaves and the like caused by electric waves outputted from the reader 15 (15A,15B) is usable as the identification devices 30A, 30B and 30C. In the exemplary embodiment, each of the identification devices 30A, 30B and 30C includes the IC tag 301 (identification part) (see Fig. 4). However, each of the identification devices 30A, 30B and 30C may include a plurality of IC tags 301.

The identification device 30D includes a single passive-type IC tag 301 described above. The IC tag 301 of the identification device 30D may be the same as or different from the IC tags 301 of the respective identification devices 30A, 30B and 30C in shape and configuration. The IC tag 301 of the identification device 30D at least includes an antenna 36 and an IC chip 35 which will be described below.

Since the identification device 30 thus includes the passive type IC tags 301, an internal battery is unnecessary, so that a cost is reducible and operation failure caused by a run-out battery is preventable.

### Description of IC Tag

Fig. 4 is a schematic view showing a configuration of the IC tag 301. The IC tag 301 is an RFID (Radio Frequency Identification) tag in which the IC chip 35 and the internal antenna 36 are encapsulated with package materials 31 and 32.

The IC tag 301 of the exemplary embodiment can communicate in a communication frequency zone, namely, a UHF (ultrahigh frequency) zone, specifically, in a zone of 860 MHz to 960 MHz. The communication frequency zone of the RFID tag may be a zone other than the above zone.

The IC chip 35 is connected to the antenna 36. A shape and a size of the antenna 36 are set so that the antenna 36 can communicate with the readers 15A and 15B. The IC chip 35 and the antenna 36 are held between the package materials 31 and 32. Fig. 4 is an illustration with the package material 31 being seen through. The IC tag 301 is attached to each of the filters 20A, 20B and 20C and the engine EG with a bonding member such as a double-sided adhesive tape or an adhesive agent.

The IC chip 35 stores parts information (tag information) including a code for identifying an IC chip (TID: Tag Identifier) and a code for identifying a part (e.g., filter 20 and engine EG) to which the identification device 30 is attached (EPC: Electronic Product Code).

Among the above codes, EPC stores identification information including a part name identification number for identifying a name of a part, a part number for specifying a type of the part to which the identification device 30 is attached, a manufacturing date, a serial number (manufacturing number) for specifying each of parts having the same part number, and a supplier code showing a manufacturer of the part. The part name identification number is used for identifying the parts such as the engine oil filter, fuel pre-filter and fuel main filter. For instance, an individual number is allocated to each of the parts as the part name identification number. When the part is the engine EG, an individual number allocated to the engine may be defined as the part name identification number. Moreover, when the part is the engine EG, the identification information includes, for instance, the number of times of overhaul of the engine EG. For instance, a later-described information identification judging unit 207 makes a judgment using the part name identification number.

### Description of Parts Information Management System

Fig. 5 is a block diagram showing a configuration of the hydraulic excavator and an overall configuration of a parts information management system 100 including the hydraulic excavator 1.

The reader 15 (15A, 15B), which is a communication device to communicate with the identification devices 30A, 30B, 30C and 30D, is attached to the machine room 5A as shown in Fig. 5. The reader 15 reads out parts information (hereinafter, also simply referred to as "data") stored in the respective 1C tags 301 of the identification devices 30A, 30B, 30C and 30D. In the exemplary embodiment, the reader 15 has a reading function. However, the reader 15 may be replaced by a reader-writer having a writing function in addition to the reading function.

The reader 15A is provided in the pump room 5A1 and communicates with the identification devices 30A and 30B respectively attached to the filters 20A and 20B under the control of the communication controller 200. The reader 15A reads out the parts information from the identification devices 30A and 30B.

The reader 15B is provided in the engine room 5A2 and communicates with the identification device 30C attached to the filter 20C and the identification device 30D attached to the engine EG. The operation of the reader 15B may be controlled by the communication controller 200 directly or through the reader 15A. The reader 15B executes a process of reading the parts information from the identification devices 30C and 30D.

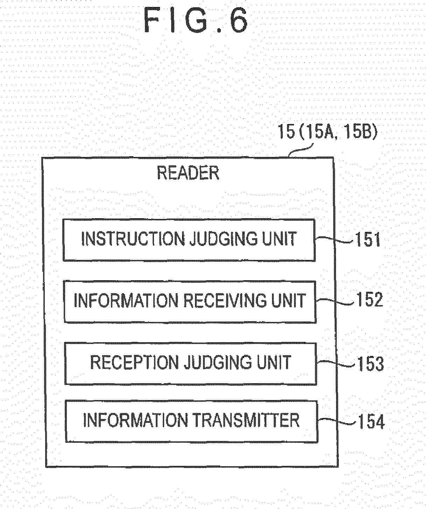

Fig. 6 is a block diagram showing a configuration of the reader 15 (15A, 15B).

As shown in Fig. 6, the reader 15 includes an instruction judging unit 151, information receiving unit 152, reception judging unit 153, and information transmitter 154 as a function section.

The instruction judging unit 151 judges whether or not instruction information of instructing acquisition of the parts information stored in the identification device 30 is inputted from the communication controller 200 described below.

When the instruction judging unit 151 judges that instruction information has been inputted, the information receiving unit 152 outputs electric waves to the identification device 30 and receives the parts information from the identification device 30.

The reception judging unit 153 judges whether or not the information receiving unit 152 has received the information.

The information transmitter 154 transmits the parts information received by the information receiving unit 152 to the communication controller 200. Moreover, when the parts information is not acquired from the identification device 30, the information transmitter 154 transmits error information to the communication controller 200 as described later. The operation of the reader 15 will be described in detail later.

In the exemplary embodiment, the readers 15A and 15B have the same configuration. One of the two readers 15A and 15B is a master reader and the other thereof is a slave reader. When the master reader controls the slave reader, it is only necessary that the master reader is added with a unit for controlling the slave reader and a unit for acquiring information received by the slave reader from the identification device 30.

The reader 15 (15A, 15B) communicates with the IC tag 301 of the identification device 30, for instance, via electric waves in the UHF zone at 900 MHz. Since the reader 15 (15A, 15B) can communicate with the identification devices 30A, 30B, 30C and 30D that are about 1 m away from the reader 15 (15A, 15B) when the electric waves fall within the above frequency zone, the reader 15 (15A, 15B) can be used even in the pump room 5A1 and the engine room 5A2.

In the exemplary embodiment, the reader 15 that is a reading device is used as a communication device. However, as described above, the reader 15 may be replaced by a reader-writer (reading and writing device) having a reading function of information from the identification device 30 and a writing function of information to the identification device 30.

Although two readers 15 (15A, 15B) are provided in the exemplary embodiment, a single reader 15 may be provided, or two or more readers 15 may be provided. However, since a communication condition between the reader 15 and each of the identification device 30 depends on a relative positional relationship therebetween, with a plurality of readers 15, the parts information stored in the IC tag 301 can be read with higher probability.

### Description of Each Controller

As shown in Fig. 5, in addition to the above configuration, the hydraulic excavator 1 (working vehicle) further includes the communication controller 200, an engine controller 211, a pump controller 212 and a monitor 213 and an in-vehicle network 210 that connects the communication controller 200, engine controller 211, pump controller 212 and monitor 213 to allow data communication therebetween.

### Engine Controller

The engine controller 211 receives power supply from a battery (not shown) by a key-on operation of an operator and is driven. When the engine EG is started, the engine controller 211 notifies the communication controller 200 of information indicating the start of the engine.

The engine controller 211 adjusts a fuel amount to be supplied to the engine EG to control output of the engine EG. Further, the engine controller 211 acquires detection values of the temperature sensors 221 and 222 and transmits the detection values to the communication controller 200 via the in-vehicle network 210.

The pump controller 212 controls output of the pump PN. Moreover, the pump controller 212 acquires a detection value of the temperature sensor 223 and transmits the detection value to the communication controller 200 via the in-vehicle network 210.

The monitor 213 has a display function of displaying a remaining amount of the fuel, failure information of the hydraulic excavator 1, and the like, and also has an input function of setting the operation of the hydraulic excavator 1.

### Communication Controller

The communication controller 200 has a communication terminal 202 connected to an antenna 201 in order to allow intercommunication with the management center 110 via a later-described communication network 120.

The communication controller 200 is connected to the engine controller 211, pump controller 212, monitor 213 and readers 15A and 15B via the in-vehicle network 210, so that mutual data communication is possible. A communication system in the exemplary embodiment is configured by the communication controller 200, the readers 15A and 15B and the identification device 30, in which mutual data communication is possible via the in-vehicle network 210. The communication system may be thus installed in the working vehicle. Alternatively, a communication system at least including the management server 111 of the management center 110 in the working vehicle may be used.

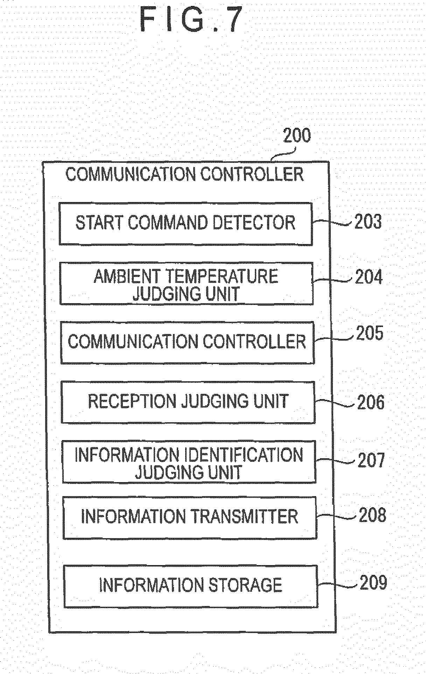

As shown in Fig. 7, the communication controller 200 includes a start command detector 203, ambient temperature judging unit 204, communication controller 205, reception judging unit 206, information identification judging unit 207, information transmitter 208, and information storage 209. The parts information previously received from the reader 15 is stored in the information storage 209.

For instance, the start command detector 203 receives a signal from the engine controller 211 to detect start of the engine EG, or receives and detects a start command from the management center 110.

The ambient temperature judging unit 204 judges whether or not a temperature of the environment (i.e., ambient temperature) in which the identification device 30 is disposed exceeds an operational temperature of the identification device 30 based on a detection value of at least one of the temperature sensors 221, 222 and 223. In other words, the ambient temperature judging unit 204 judges whether or not the ambient temperature exceeds the operational temperature for ensuring the operation of the identification device 30, specifically, judges whether or not the ambient temperature in a place where the identification device 30 is disposed exceeds the ambient temperature of the environment in which the reader 15 can read the parts information from the identification device 30 without a reading failure.

The communication controller 205 controls electric wave output (electric wave oscillation) of the reader 15 based on the detection result of the start command detector 203 and the judgment result of the ambient temperature judging unit 204.

The reception judging unit 206 judges whether or not a reception of the information from the reader 15 is completed.

The information identification judging unit 207 compares the parts information received from the reader 15 with the parts information stored in the information storage 209 to judge whether or not both of the parts information (data) are the same. When the information identification judging unit 207 judges that new parts information (data) is acquired, the information identification judging unit 207 keeps the parts information (data) stored in the information storage 209 and stores the newly acquired parts information (data). In such a case, later, when the parts information received from the reader 15 does not include the parts information kept in the information storage 209, the kept parts information may be deleted at this timing. Alternatively, when the information identification judging unit 207 judges that new parts information (data) is acquired, the parts information (data) stored in the information storage 209 may be deleted immediately. In both cases, the parts information about a replaced and removed part is deleted from the information storage 209 and parts information about a newly attached part is stored in the information storage 209. The information identification judging unit 207 can make a judgment by, for instance, comparing the acquired and stored part name identification information with the newly acquired part name identification information. Such a comparison process may be conducted in the management server 111 described later.

The information transmitter 208 transmits the information acquired by the reader 15 from the identification device 30, the results (error information) of the receiving process and the like to the management server 111. In this case, the information transmitter 208 transmits the data retrieved from the identification device 30 to the management server 111 of the management center 110 together with one of, for instance, data indicating a time point when the reader 15 is activated, data indicating a time point when the reader 15 reads out the data of the identification device 30, and data indicating a time point when the data of the identification device 30 is transmitted to the management server 111, or together with a plurality of data described above, via the communication terminal 202, antenna 201, and communication network 120. The data indicating the above times can be acquired, for instance, by a timepiece IC of the communication controller 200.

Note that a controller other than the communication controller 200, for instance, the pump controller 212 or the reader 15 may have the above-described functions of the communication controller 200.

### Parts Information Management System of Working Vehicle

Next, the parts information management system 100 with use of the information of the identification device 30 will be described. The parts information management system 100 is exemplarily applied to the hydraulic excavator 1 below. However, the invention is also applicable to other working vehicles in a form of a construction machine.

The parts information management system 100 manages and monitors presence or absence of parts replacement of a filter and the like installed in the working vehicle, in the management center 110 located apart from the working vehicle, via the communication network 120. As shown in Fig. 5, the parts information management system 100 includes the management center 110, at least one working vehicle (e.g., the hydraulic excavator 1), and the communication network 120 that transmits and receives information between the management center 110 and the working vehicle.

Among these, the communication network 120 is used for data communication in a form of wireless communication. A mobile phone network and a satellite communication network are usable.

The management center 110 includes the management server 111 that manages all various information including parts information of a plurality of working vehicles.

The management server 111 is configured by a large-volume storage including hard disks and the like. The management server 111 is connected in a mutually communicating manner to a display 112 including a liquid crystal monitor and the like, a communication device 113 capable of wireless communication or wired communication, and the like. The management server 111 manages and stores the above parts information received from the hydraulic excavator 1 via the communication network 120.

Specifically, the management server 111 in a form of the above storage stores TID and EPC contained in the parts information in manner associated with each other. Accordingly, by cross-checking a combination of the newly acquired data of TID and EPC retrieved from the IC tag 301 and the stored data, the management server 111 can judge whether or not the part (e.g., filter 20) of the working vehicle is replaced and whether or not the part attached to the working vehicle is a genuine product. By such a cross-checking, a time elapsed after the part is attached to the working vehicle can be grasped. Accordingly, for instance, the management server 111 can manage a replacement timing of the filter 20.

### Information Collection Process in Parts Information Management System

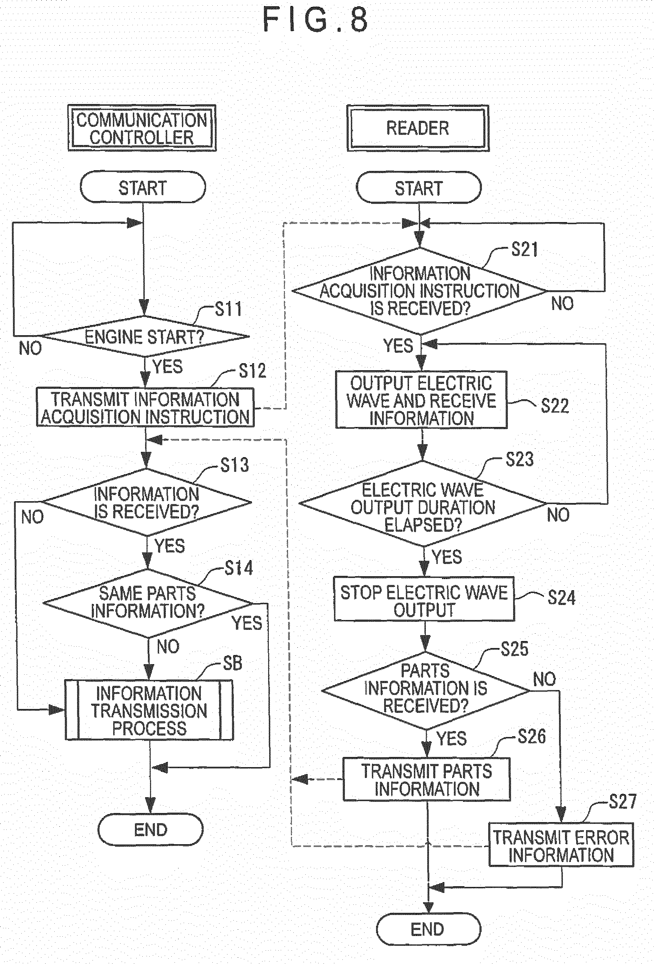

Figs. 8 to 10 each are a flowchart showing an information collection process executed in the parts information management system 100.

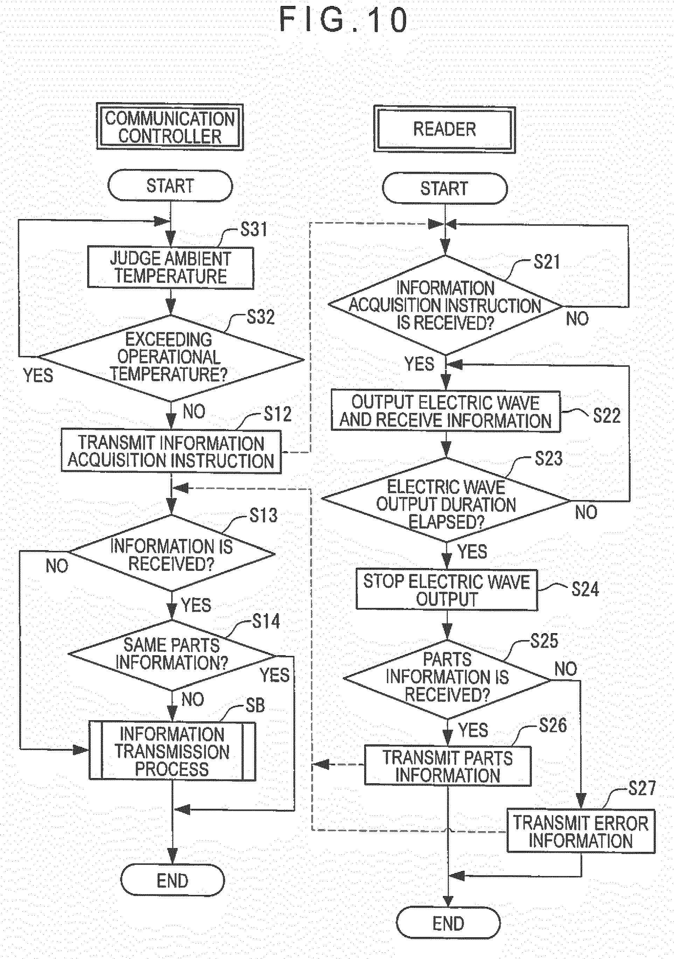

The parts information management system 100 according to the exemplary embodiment mainly performs an information collection process when a start command is given as shown in Fig. 8 and an information collection process at a timing other than when the engine starts as shown in Fig. 10.

Here, the start command is given when the engine EG starts by the key-on operation by the operator of the hydraulic excavator 1 and when the communication controller 200 and the reader 15 are activated after a start command (start signal) from an administrator of the management center 110 is given to the communication controller 200. The parts information management system 100 according to the exemplary embodiment generates the start signal at one or both of when the engine EG is started by the operator and when the administrator gives the start command and operates the reader 15 in response to the start signal (a trigger) to execute the information collection process.

The information collection process at a timing other than when the start command is given is executed by operating the reader 15 on a regular basis or by an operational instruction by the operator or the administrator of the management center 110.

For instance, a timer function may be provided to the communication controller 200 so that the communication controller 200 operates the reader 15 as a trigger of the start signal at a regular timing (e.g., once per day). Alternatively, the communication controller 200 may operate the reader 15 in response to an operational instruction by the operator using a predetermined operational button provided on the monitor 213. Specifically, when the operator operates the operational button for generating a predetermined start signal, the communication controller 200 may activate the reader 15 in response to the start signal as a trigger when the communication controller 200 receives the start signal.

In addition, a sensor may be provided to each of the filter heads 13A, 13B and 13C to detect attachment and detachment of the respective filters 20A, 20B and 20C so that the communication controller 200 activates the reader 15 in response to output (start signal) of the sensor as a trigger.

### Information Collection Process When Start Command Is Given

Next, the information collection process when the start command is given will be described with reference to Fig. 8.

### Information Acquisition Instruction Control of Communication Controller

The start command detector 203 of the communication controller 200 checks presence or absence of the information indicating the start of the engine (engine start information) from the engine controller 211 and judges whether or not the engine EG starts by a switch-on operation of an engine key by the operator, or the communication controller 200 is activated by the start command sent from the management center 110 via the communication network 120 (Step S11). Fig. 8 shows a case where the start command detector 203 detects the engine start information. Note that the engine start information may be yielded using a signal indicating that the key switch is operated to an accessory position. Specifically, even when the engine does not start by the key switch, when the key switch is operated to the accessory position and power is supplied to electronic devices such as the communication controller 200 and the reader 15 (Step S11, Yes), the information collection process when the start command is given as shown in Fig. 8 may be executed.

When the start command detector 203 does not detect the engine start information, the start command detector 203 judges No in Step S11 and repeats checking of Step S 11.

When the start command detector 203 detects the start of the engine EG and judges Yes in Step S11, the communication controller 205 of the communication controller 200 transmits an instruction for acquiring the parts information from the identification device 30 to the reader 15 (Step S12). Specifically, the communication controller 205 outputs instruction information (a instruction command) for acquiring the parts information to the reader 15.

At this time, the communication controller 205 may transmit instruction information to the readers 15A and 15B individually. Alternatively, when the reader 15A (master) controls the reader 15B (slave), the communication controller 205 may transmit the instruction information only to the reader 15A. At this time, the reader 15A transmits the instruction information to the reader 15B.

Subsequently, the communication controller 200 proceeds to a process for judging whether or not the reception of the information transmitted from the reader 15 is completed (Step S 13).

### Information Acquisition Process of Reader

The instruction judging unit 151 of the reader 15 judges whether or not the reception of the instruction information to instruct acquisition of the parts information from the communication controller 205 is completed (Step S21). This judgment process is repeated until the instruction information is received.

Here, when the instruction information is received, the instruction judging unit 151 judges Yes in Step S21. The information receiving unit 152 of the reader 15 outputs electric waves to the identification device 30 and receives information outputted from the identification device 30 receiving the electric waves (Step S22). Here, since the pump room 5A1 and the engine room 5A2 are separated by the partition 5A3, the electric waves outputted from the reader 15A are received by the identification devices 30A and 30B while the electric waves outputted from the reader 15B are received by the identification devices 30C and 30D.

After receiving the electric waves from the reader 15, the identification device 30 activates the IC tag 301 and outputs the electric waves (reflection waves) to the reader 15. Accordingly, the reader 15 can receive information from the IC tag 301.

### Judgment on Elapse of Electric Wave Output Duration

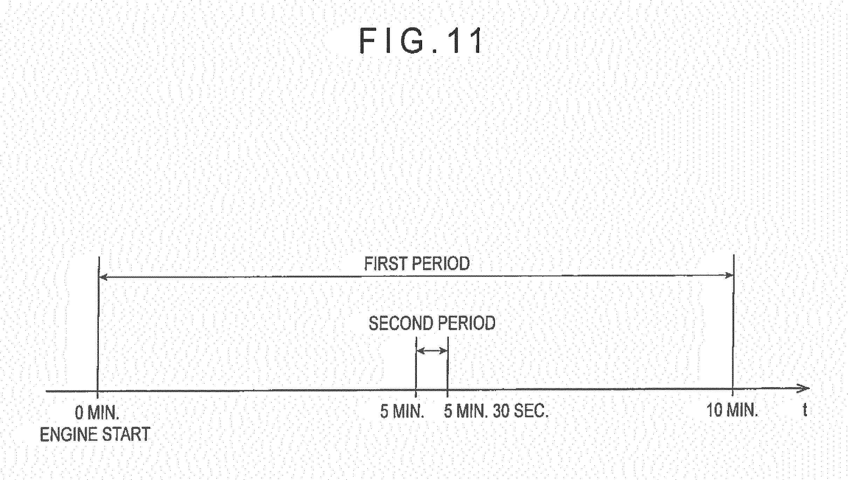

After the output of the electric waves is started, the reader 15 judges elapse of the electric wave output duration (Step S23). Fig. 11 is a time chart explaining the electric wave output duration. Here, the electric wave output duration is a predetermined duration starting from the start of the engine EG. For instance, the electric wave output duration is a period from five minutes elapsed after the start of the engine until a second period elapses (e.g., 30 seconds). A starting time of the electric wave output duration, in other words, an actual time when the electric waves starts to be outputted from the reader 15 is set at five minutes (waiting time) elapsed after the start of the engine. An ending time of the electric wave output duration is set at five minutes and 30 seconds after the start of the engine. Note that the electric waves may be outputted from the reader 15 without the waiting time after the start of the engine. However, preferably, the waiting time is provided after the start of the engine as described above and the electric waves are to be outputted from the reader 15 after the elapse of the waiting time. The reader 15 outputs the electric waves during the second period (30 seconds) (i.e., electric wave output duration) from the starting time to the ending time as described above. The electric wave output duration (the second period) is the period from the start of the electric wave output to the stop of the electric wave output. In other words, the second period is duration when the reader 15 actually outputs the electric waves. The electric wave output duration may be set by the communication controller 205 transmitting a command to stop the electric wave output after a predetermined time to the reader 15 after instructing information acquisition (electric wave output). Alternatively, the electric wave output duration may be set by the communication controller 205 simultaneously instructing the information acquisition and the electric wave output duration to the reader 15. Further alternatively, the electric wave output duration may be set in advance in the reader 15. The reader 15 does not transmit the electric waves for five minutes from the start of the engine EG. Electric power is supplied from a battery (not shown) to electronic devices such as the communication controller 200 by operating a key switch to ON or an accessory position. Duration from the start command until a predetermined time (e.g., five minutes) elapses is the waiting time for making the reader 15 halt the electric wave output. By thus providing the waiting time, the electronic devices such as the communication controller 200 can reliably read the parts information stored in the IC tag 301 after the start of the engine.

A timing for ending the electric wave output duration is within a time (a first period) required for a temperature in a space where the identification device 30 is disposed to exceed an operational temperature, at which the operation of the identification device 30 is ensured, by the start of the engine EG. Simultaneously, the electric wave output duration when the electric wave are actually outputted (time including the second period (e.g., 30 seconds as described above)) is set to be equal to or exceed the information acquisition time necessary for reading the parts information by the electric wave output.

The duration when the electric wave are actually outputted is duration (e.g., 30 seconds) necessary for acquiring the parts information when the temperature does not exceed the operational temperature of the identification device 30. On the other hand, the first period is influenced by an engine speed, outside air temperature and the like, but is set at the shortest time under the predictable conditions. Before setting the first period, the hydraulic excavator 1 is operated to measure an increase in a temperature inside the machine room 5A and/or conduct a thermal analysis simulation inside the machine room 5A. The first period can be set to, for instance, 10 minutes based on the obtained results. In other words, when the outside air temperature is high and the engine EG is controlled at a high speed immediately after the start of the engine EG, an increasing rate of the temperature of the engine EG is also high. Accordingly, the temperature of each of the identification devices 30C and 30D disposed in the engine room 5A2 is likely to exceed an upper limit of the operational temperature after the elapse of the first period due to heat generated in the engine EG, a temperature of a fluid flowing through the filter 20C, and further the outside air temperature and direct sunlight irradiated on the top of the machine room 5A.

Note that a temperature of each of the identification devices 30A and 30B disposed in the pump room 5A1 is little influenced by the engine EG since the identification devices 30A and 30B are disposed away from the engine EG, so that the temperature of each of the identification devices 30A and 30B seldom exceeds the operational temperature of each of the identification devices 30A and 30B.

Accordingly, by further prolonging the electric wave output duration (the second period) when the electric waves are actually outputted, the parts information of the identification device 30 can be more reliably acquired. Simultaneously, by setting the timing for ending the electric wave output duration at less than the first period, the identification device 30 can be prevented from communicating at a high temperature exceeding the operational temperature. In other words, as long as within the electric wave output duration after the start of the engine EG, the identification information can be acquired at a low ambient temperature of the identification device 30 without operational failure of the identification device 30.

When the second period does not elapse after the electric waves starts to be actually outputted, the information receiving unit 152 of the reader 15 judges No in Step S23 and continues the process of Step S22.

On the other hand, when the second period elapses after the electric waves starts to be actually outputted, the information receiving unit 152 judges Yes in Step S23 and stops the output of the electric waves (Step S24). The reception judging unit 153 of the reader 15 judges whether or not the reception of the parts information is completed (Step S25).

When the reception of the parts information is completed, the reception judging unit 153 judges Yes in Step S25. The information transmitter 154 associates the received parts information with data about information acquisition date to hold as a transmission information and transmits the transmission information to the communication controller 200 (Step S26).

When the parts information is not received, the reception judging unit 153 judges No in Step S25. The information transmitter 154 associates error information with data on information acquisition date to hold and transmits the error information to the communication controller 200 (Step S27).

After the completion of the Steps S26 and S27, the information acquisition process by the reader 15 ends.

### Information Acquisition Process of Communication Controller

In Step S13, the reception judging unit 206 of the communication controller 200 judges whether or not the information transmitted from the reader 15 (the error information or the transmission information) is received.

When the information transmitted from the reader 15 is received, the reception judging unit 206 judges Yes in Step S13. At this time, the information identification judging unit 207 of the communication controller 200 judges whether or not the acquired parts information (the parts information contained in the transmission information received from each of the identification device 30) and the parts information already stored in the information storage 209 are the same (Step S14).

When the acquired parts information and the parts information stored in the information storage 209 are the same, the information identification judging unit 207 judges Yes in Step S14 and the communication controller 200 ends the information collection process.

On the other hand, when the parts information is changed or the error information is received instead of the parts information, the information identification judging unit 207 judges No in Step S 14. When the information identification judging unit 207 judges No, the information transmitter 208 of the communication controller 200 executes an information transmission process SB that transmits the acquired parts information and the error information to the management server 111.

When the reception judging unit 206 does not receive the information transmitted from the reader 15 and judges No in Step S13, in other words, when the information is not transmitted from the reader 1 even after the elapse of the electric wave output duration after the information acquisition instruction is transmitted in Step S12, the reader 15 and the in-vehicle network 210 are likely to be in poor conditions such as failure and disconnection. Accordingly, the information transmitter 208 executes the information transmission process SB that transmits to the management center 110 the error information indicating no reception of the information from the reader 15.

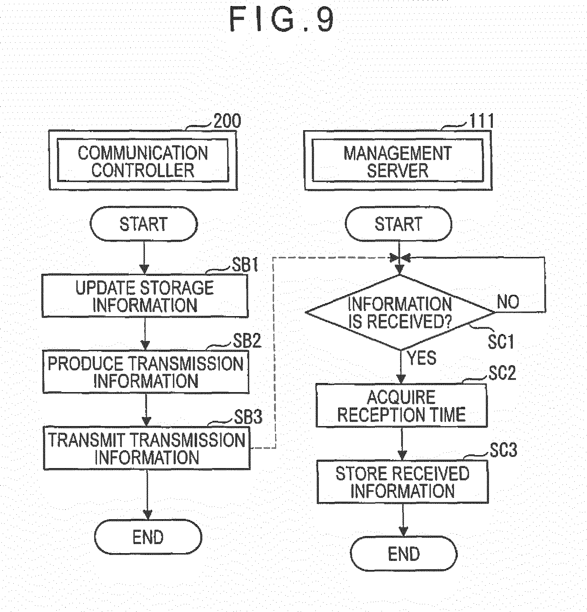

Fig. 9 is a flowchart showing the information transmission process SB to be executed by the information transmitter 208 of the communication controller 200 and the information storage process SC to be executed by the management server 111.

In the information transmission process SB, when parts information is newly acquired, the communication controller 200 updates the parts information already stored in the information storage 209 with the newly acquired parts information as shown in Fig. 9 (Step SB1). At this time, when the parts information of all the identification device 30 is already acquired from the reader 15, the communication controller 200 may update all the parts information already stored in the information storage 209 with the newly acquired information. When the parts information acquired from the reader 15 is different from the parts information already stored in the information storage 209, only the parts information judged different may be updated with the newly acquired parts information. Alternatively, when the parts information acquired from the reader 15 contains parts information different from the parts information already stored in the information storage 209, the parts information already stored in the information storage 209 and judged different may be not immediately deleted or updated, but, instead, may be kept in the information storage 209 and deleted later. Alternatively, the currently acquired parts information may be displayed on the monitor 213. Further, when the error information is acquired, the monitor 213 or the like may issue an alarm indicating occurrence and contents of the error information.

Next, the communication controller 200 yields the transmission information for transmitting the acquired information to the management server 111 (Step SB2). The transmission information contains the parts information judged different, the error information and the date data relating to those information. All the newly acquired information (the information received from the reader 15) may be contained in the transmission information.

Subsequently, the communication controller 200 transmits the yielded transmission information to the management server 111 via the communication network 120 (Step SB3).

By this step, the information transmission process SB in the hydraulic excavator 1 ends.

The management server 111 executes an information storage process SC below.

In the information storage process SC, as shown in Fig. 9, the management server 111 repeats the judgment process whether or not the transmission information from a predetermined working vehicle (e.g., the hydraulic excavator 1) is received (Step SC1).

When it is judged that the transmission information is received, the management server 111 acquires a date (time and date) of when the transmission information is received (Step SC2).

Subsequently, the management server 111 extracts the parts information and the error information from the received transmission information and stores these information and the date acquired in Step SC2 in a manner associated with each other (Step SC3). At this time, after executing the same judgment process in Step S14, the parts information different from the previously acquired parts information and the error information may be reported to an administrator of the management server 111.

By this step, the information storage process SC by the management server 111 ends, in other words, the information collection process in the parts information management system 100 ends.

### Information Collection Process by Ambient Temperature Judgment

Next, in the exemplary embodiment, the information collection process of the identification device 30 except for the start of the engine will be described with reference to the flowchart of Fig. 10. Note that the same process in the flowchart of Fig. 8 is denoted by the same numerical reference and the description of the same process is omitted.

The process of Fig. 10 is executed when the operation of the reader 15 is instructed on a regular basis or by an operational instruction by the operator or the administrator of the management center 110.

### Ambient Temperature Judgment

The communication controller 200 judges the temperature of the space (environment) where the identification device 30 is disposed, by the ambient temperature judging unit 204 (Step S31).

Specifically, the ambient temperature judging unit 204 acquires the detection values of the temperature sensors 221 and 222 from the engine controller 211. Moreover, the ambient temperature judging unit 204 acquires the detection value of the temperature sensor 223 from the pump controller 212. The ambient temperature of each of the identification devices 30A, 30B, 30C and 30D is judged based on the detection values of the temperature sensors 221, 222 and 223.

For instance, since the identification device 30D provided in the engine room 5A2 is attached to the engine EG, the temperature of the identification device 30D is estimated based on the detection value of the temperature sensor 222 for detecting the water temperature of the engine EG. Moreover, since the fuel main filter 20C provided in the engine room 5A2 is close to the engine EG, the temperature of the identification device 30C can also be estimated based on the detection value of the temperature sensor 222. When a sensor is provided for detecting the temperature of the fuel flowing in the fuel main filter 20C, the temperature of the identification device 30C may be estimated with reference to the detection value of the sensor.

On the other hand, the engine oil filter 20A provided in the pump room 5A1 receives less influence by the heat of the engine EG, but receives an influence by the temperature of the engine oil flowing in the filter 20A and the temperature of the hydraulic fluid flowing in the pump PN. Accordingly, the temperature of the identification device 30A can be estimated based on the detection values of the temperature sensor 221 and the temperature sensor 223.

The fuel pre-flter 20B provided in the pump room 5A1 receives less influence by the heat of the engine EG, but receives an influence by the temperature of the fuel flowing in the filter 20B and the temperature of the hydraulic fluid flowing in the pump PN. Accordingly, when a sensor is provided for detecting each of the detection value of the temperature sensor 223 and the temperature of the fuel flowing in the fuel pre-filter 20B, the temperature of the identification device 30B may be estimated with reference to the detection value.

Consequently, the temperature sensors 221, 222 and 223 each are a temperature detector that detects a temperature correlated to the ambient temperature of the environment in which the identification devices 30A, 30B, 30C and 30D are disposed and detects the ambient temperature of the environment in which the identification devices 30A, 30B, 30C and 30D are disposed.

The ambient temperature judging unit 204 judges whether or not the temperature (ambient temperature) of each of the identification devices 30A, 30B, 30C and 30D exceeds the operational temperature of each of the identification devices 30A, 30B, 30C and 30D (Step S32). On the other hand, when the upper limit of the operational temperature of the identification device 30 is set, the ambient temperature judging unit 204 judges that the ambient temperature exceeds the operational temperature when the ambient temperature is at a high temperature exceeding the upper limit. Here, when the lower limit of the operational temperature of the identification device 30 is set, the ambient temperature judging unit 204 judges that the ambient temperature is below the operational temperature when the ambient temperature falls below the lower limit. Accordingly, when both of the upper limit and the lower limit of the operational temperature are provided to define an operational temperature range, the ambient temperature judging unit 204 judges that the ambient temperature exceeds or falls below the operational temperature when the ambient temperature is out of the operational temperature range.

When the ambient temperature does not exceed the operational temperature (No in Step S32), the transmission process of the information acquisition instruction is conducted in the same manner as in Fig. 8 (Step S12). Hereinafter, the reader 15 executes the processes in Steps S21 to S27 in the same manner as in Fig. 8. Note that it is only necessary that the electric wave output duration is equal to or exceeds the second period. Although the first period is not set because the process is executed not at the start of the engine, the electric wave output duration for saving unnecessary electric consumption may be set as short as possible as long as the electric wave output duration is equal to or exceeds the second period.

The communication controller 200 executes the processes in Steps S13 to SB in the same manner as in Fig. 8. Further, the information transmission process SB is the same as the process shown in Fig. 9.

Specifically, the acquisition process of the parts information from the identification device 30 is the same as the information acquisition process when the start command is given, only except for executing the transmission process of the information acquisition instruction of Step S12.

On the other hand, when the ambient temperature of the identification device 30 exceeds the operational temperature, the ambient temperature judging unit 204 judges Yes in S32 and the communication controller 200 does not execute the transmission process of the information acquisition process of Step S12. Specifically, when the ambient temperature judging unit 204 judges that the temperature of the environment where the identification device 30 is disposed exceeds the operational temperature for ensuring the operation of the identification device 30, the communication controller 205 of the communication controller 200 prohibits the output of the electric waves of the reader 15.

Accordingly, the reader 15 does not output the electric waves while the identification device 30 exceeds the operational temperature, so that the reading and writing process of the information can be reliably prevented while the identification device 30 exceeds the operational temperature.

With the above-described parts information management system 100, the management server 111 acquires the parts information of the identification devices 30A, 30B, 30C and 30D, thereby grasping the attachment timing, the time elapsed after the attachment, and presence or absence of the filters 20A, 20B and 20C, and the number of times of overhaul of the engine EG.

When the parts information about the identification device 30 received by the management server 111 and the date information associated with the parts information when the hydraulic excavator 1 acquires and transmits the parts information are respectively different from the parts information and the date information which are previously received by the management server 111, the management server 111 can recognize presence or absence of the attachment replacement of the filters 20A, 20B and 20C and the engine EG and the attachment timing (i.e., replacement timing), so that the management server 111 can manage a next replacement timing.

It is assumable that an imitation filter may be not provided with a genuine identification device 30 or may be provided with no identification device 30. Accordingly, when the imitation filter is attached, the reader 15, communication controller 200 and management server 111 cannot acquire the parts information. In this case, the reader 15 creates the error information and the error information is acquired by the communication controller 200 and the management server 111. Consequently, the management server 111 can expect that an imitation filter is possibly attached to the hydraulic excavator 1.

The respective attachment timings of the filters 20A, 20B and 20C are not necessarily the same, but the attachment timing of each of the filters 20A, 20B and 20C can be grasped by the communication controller 200 by comparing the new data with the old data as described above. The management server 111 acquires information about the accumulated operational duration obtained from an SMR (service meter) (not shown), which records accumulated operational duration in a working vehicle, from the hydraulic excavator 1 through the communication network 120 and relates the acquired information about the accumulated operational duration to the parts information, so that use duration of each of the filters 20A, 20B and 20C in the working vehicle can be grasped. Accordingly, a next replacement timing of the filter 20 can be easily and reliably managed. Moreover, since the number of the times of the overhaul of the engine EG, which is contained in the parts information of the identification device 30D, can be acquired, a next overhaul timing can be easily and reliably managed based on a change in the accumulated operational duration after an increment in the number of the times of the overhaul of the engine EG.

It is crucial to reliably acquire the information about the identification device 30 by a suitable operation of each of the readers 15 in order to establish the parts information management system 100.

Further, even when the communication controller 200 cannot receive the information from the reader 15 (No in Step S13), the communication controller 200 transmits the error information to the management server 111 and displays the error information on the monitor 213. Accordingly, the operator of the hydraulic excavator 1 and the administrator of the management center 110 can grasp a possibility of failure of the reader 15 or disconnection of the in-vehicle network 210.

According to the above described hydraulic excavator 1 and parts information management system 100 in the exemplary embodiment, the following advantages can be attained.

In order to judge whether or not the ambient temperature of the environment in which the identification device 30 is disposed exceeds the operational temperature of the identification device 30 immediately after the start of the engine, the ambient temperature judging unit 204 judges whether or not the ambient temperature of the environment in which the identification device 30 is disposed exceeds the operational temperature of the identification device 30 based on the detection values of the temperature sensors 221, 222 and 223. When the ambient temperature judging unit 204 judges that the ambient temperature of the environment in which the identification device 30 is disposed does not exceed the operational temperature of the identification device 30, the reader 15 outputs the electric waves to acquire the information of the identification device 30. Accordingly, when the identification device 30 is disposed at a high temperature environment exceeding the operational temperature, the data reading/writing to the identification device 30 can be prevented from being executed, so that occurrence of operational failure (reading failure and writing failure) of the identification device 30 can be reliably prevented.

Moreover, since the temperature sensors 221, 222 and 223 are typically provided, it is not necessary to newly provide a temperature sensor, so that the temperature sensor can be realized at a low cost.

### Modification(s)

The scope of the invention is not limited to the above exemplary embodiment but includes modifications and improvements to the extent that an object of the invention can be achieved.

In the above exemplary embodiment, the ambient temperature judging unit 204 judges the ambient temperature using the temperature sensors 221, 222 and 223 provided in the hydraulic excavator 1 in advance. However, the arrangement for judging the ambient temperature is not limited thereto. Specifically, a temperature sensor for measuring the ambient temperature may be provided to a component (e.g., the filter 20) and/or the engine EG in addition to the identification device 30, thereby judging the ambient temperature. Alternatively, a temperature sensor may be provided in each of the engine room 5A2 and the pump room 5A1 to measure the ambient temperature therein, whereby the ambient temperature may be judged. Thus, the ambient temperature judging unit 204 can judge the ambient temperature using the temperature sensor for detecting the temperature in the machine room 5A, the temperature sensor attached to the component, and the temperature sensor for detecting the temperature of the engine cooling water or the engine oil.

Further, in the above exemplary embodiment, the ambient temperature is not judged in the information collection process when the start command is given. However, in the information collection process when the start command is given, the reader 15 may output electric waves to acquire the information of the identification device 30 when the ambient temperature judging unit 204 estimates the ambient temperature based on the detection values of the temperature sensors 221, 222 and 223 and judges that the ambient temperature of the environment in which the identification device 30 is disposed does not exceed the operational temperature of the identification device 30. Further, in this case, a temperature sensor may be provided inside the identification device 30 and a detection value of the temperature sensor provided inside the identification device 30 may be received in addition to the parts information when information is collected in response to the start command.

Moreover, in the information collection process when the start command is given, a stop duration detector may be provided for detecting an engine stop duration from the previous stop of the engine to the next start of the engine. When the engine stop duration is less than a set value, even when the start command detector 203 detects the start of the engine, the communication controller 205 may prohibit the electric wave output of the reader 15. Before setting the set value, the hydraulic excavator 1 is operated to measure an increase in the temperature inside the machine room 5A and conduct the thermal analysis simulation inside the machine room 5A. The set value can be set based on the obtained results.

Herein, the engine stop duration can be obtained by recording the date data in the communication controller 200 at the previous stop of the engine and then calculating an elapsed time as a difference between the above date data and the date data indicating the next start of the engine.

At this time, since the electric wave output is prohibited when the engine stop duration is extremely short, the data reading/writing to the identification device 30 can be prevented from being executed under a high temperature environment, so that occurrence of operational failure (reading failure and writing failure) of the identification device 30 can be reliably prevented. For instance, when the engine is stopped after the hydraulic excavator 1 excavates for long hours and the engine is started before the elapse of much time, the ambient temperature of the environment in which the identification device 30 is disposed is expected to remain under a high temperature environment. In such a case, by detecting the engine stop duration and executing a process to prohibit the electric wave output of the reader 15, a writing failure to the identification device 30 can be prevented.

In the exemplary embodiment, the communication controller 205 that controls prohibition of the electric wave output of the reader 15 is provided to the communication controller 200. However, the communication controller 205 may be provided to the reader 15. In other words, when the communication controller 200 instructs the information collection, the reader 15 may control the electric wave output by judging whether or not the electric wave output duration has passed or whether or not the ambient temperature of the identification device 30 exceeds the operational temperature.

In the exemplary embodiment, the communication controller 200 transmits the transmission information, which contains the parts information received from the identification device 30, to the management server 111 of the management center 110 via the communication network 120. However, the operation of the communication controller 200 is not limited thereto. Specifically, the communication controller 200 does not necessarily transmit the parts information to the management server 111. In this case, for instance, the communication controller 200 may display the acquired parts information and the error information on the monitor 213, whereby the operator may grasp the parts information, and furthermore, the attachment timing and the replacement timing of the filter.

In the above exemplary embodiment, the communication controller 200 executes the judgment process of whether or not the parts information acquired by each of the reader 15 is the same as the already stored parts information (parts information previously acquired). However, the judgment process is not necessarily executed only by the communication controller 200 but may also be executed by another component. For instance, each of the reader 15 may store the previously received parts information, judge whether or not this parts information is the same as the newly received parts information, and transmit the judgment results to the communication controller 200. In this case, when the previously received parts information does not contain the parts information newly received from each of the identification device 30, the reader 15 judges that the new received parts information and the previous parts information are not the same.

In the exemplary embodiment, each of the identification devices 30A, 30B and 30C includes two IC tags 301. However, the number of the IC tag 301 is not limited thereto. Specifically, a single IC tag 301 may be provided as in the identification device 30D. Alternatively, three or more IC tags 301 may be provided. Moreover, the number of the identification device 30 and the reader 15 of the working vehicle is appropriately changeable.

In the exemplary embodiment, the identification devices 30A, 30B and 30C are respectively provided to the filters 20A, 20B and 20C, and the identification device 30D is provided to the engine EG. However, the arrangement of the identification devices 30A, 30B, 30C and 30D is not limited thereto. In other words, the component to which the identification device 30 is appropriately changeable. The identification device 30 may be provided to any component (including any device) configuring the working vehicle irrespective of whether the component is a replacement component or not.

### INDUSTRIAL APPLICABILITY

The invention is applicable not only to a construction machine such as a hydraulic excavator, a wheel loader, a bulldozer, a motor grader and a dump truck but also to an industrial vehicle such as a forklift.

### EXPLANATION OF CODES

- 1...: hydraulic excavator (working vehicle),
- 20 (20A, 20B, 20C)...: filter,
- 30A, 30B, 30C, 30D..: .identification device,
- 15, 15A, 15B...: reader (communication device),
- 200...: communication controller,
- 203...: start command detector,
- 204...: ambient temperature judging unit,
- 205...: communication controller,
- 221, 222, 223...: temperature sensor (temperature detector),
- EG...: engine.

## Claims

1. A communication system provided in a working vehicle comprising an engine, the communication system comprising:
an identification device that stores identification information;
a communication device that outputs electric waves to communicate with the identification device;
an ambient temperature judging unit that judges whether or not an ambient temperature of an environment in which the identification device is disposed exceeds an operational temperature at which an operation of the identification device is ensured; and
a communication controller that prohibits the communication device from outputting the electric waves when the ambient temperature judging unit judges that the ambient temperature of the environment exceeds the operational temperature.

2. The communication system according to claim 1, further comprising:
a temperature detector that detects a temperature correlated to the ambient temperature of the environment in which the identification device is disposed, wherein
the ambient temperature judging unit judges whether or not the ambient temperature of the environment in which the identification device is disposed exceeds the operational temperature of the identification device based on the temperature detected by the temperature detector.

3. The communication system according to claim 2, wherein
the working vehicle comprises a filter that eliminates dirt in a fluid,
the identification device is attached to the filter, and
the temperature detector is a temperature sensor that detects a temperature of the fluid flowing through the filter.

4. The communication system according to claim 2, wherein
the identification device is attached to the engine, and
the temperature detector is a temperature sensor that detects a water temperature of a cooling water of the engine.

5. A communication system provided in a working vehicle comprising an engine, the communication system comprising:
an identification device that stores identification information;
a communication device that outputs electric waves to communicate with the identification device;
a start command detector that detects a start of the engine; and
a communication controller that instructs the communication device to output the electric waves when the start command detector detects the start of the engine, and to stop outputting the electric waves after electric wave output duration that is an elapsed time from a start to a stop of the output of the electric waves, wherein
the electric wave output duration is set at less than a first period required for the ambient temperature of the environment in which the identification device is disposed to exceed an operational temperature at which an operation of the identification device is ensured after the start of the engine.

6. The communication system according to claim 5, further comprising:
a stop duration detector that detects engine stop duration from a previous stop of the engine to a next start of the engine, wherein
when the engine stop duration is less than a set value, the communication controller prohibits the communication device from outputting the electric waves even when the start command detector detects the start of the engine.

7. A communication system provided in a working vehicle comprising an engine and a filter that eliminates dirt in a fluid, the communication system comprising:
an identification device that stores identification information and is attached to the filter;
a communication device that outputs electric waves to communicate with the identification device;
a temperature detector that detects a temperature of the fluid flowing through the filter, the temperature correlated to an ambient temperature of an environment in which the identification device is disposed;
the ambient temperature judging unit judges whether or not the ambient temperature of the environment in which the identification device is disposed exceeds an operational temperature of the identification device that ensures an operation of the identification device based on the temperature detected by the temperature detector; and
a communication controller that prohibits the communication device from outputting the electric waves when the ambient temperature judging unit judges that the ambient temperature exceeds the operational temperature.

8. The communication system according to any one of claims 1 to 7, wherein
the working vehicle comprises an upper revolving body comprising a machine room, and
the identification device and the communication device are provided in the machine room of the upper revolving body in the working vehicle.

9. A working vehicle comprising the communication system according to any one of claims 1 to 8.
